# EUROPÄISCHE PATENTSCHRIFT

(11) **EP 1 130 332 B1**
(45) Veröffentlichungstag und Bekanntmachung des Hinweises auf die Patenterteilung: **08.09.2004**
(21) Anmeldenummer: 00810151.1
(22) Anmeldetag: 23.02.2000
(51) Int. Cl.: F24F 7/08, F24F 12/00, F24F 13/24

(54) **Einrichtung zur Wärmerückgewinnung**
Heat recovery device
Dispositif de récupération de chaleur

(43) Veröffentlichungstag der Anmeldung: 05.09.2001
(73) Patentinhaber: Bach, Ursula, 8953 Dietikon (CH)
(72) Erfinder: Wintsch, Werner, 8953 Dietikon (CH); Bach, Ursula, 8953 Dietikon (CH)
(74) Vertreter: Patentanwälte Feldmann & Partner AG

(56) Entgegenhaltungen:
- EP-A- 0 533 629
- DE-A- 3 006 318
- DE-A- 3 310 569
- FR-A- 2 712 851
- US-A- 4 384 609

## Beschreibung

Die Erfindung betrifft eine Einrichtung gemäss dem Oberbegriff des ersten Patentanspruches entsprechend der EP-A-533 629.

Zum Belüften und Beheizen, insbesondere von gefangenen Räumen, wie Badezimmern und Küchen, wird die verbrauchte Warmluft mittels eines Ventilators abgesaugt, während das dadurch entstandene Vakuum durch Zufuhr von Luft aus den Nebenräumen oder von aussen ausgeglichen wird. In der Weise geht die in der Abluft gespeicherte Wärmemenge verloren, was zu einer Temperaturreduktion im betreffenden Raum führt. Diese Wärmemenge kann z.B. vom Kochen, Badewasser oder der Beleuchtung herrühren und geht auf diese Weise ungenutzt verloren.

DE-A-33 10 569 offenbart eine Ausführung, die nur für mehrgeschössige Bauten, mit je einem Gebläse für die Zu- und die Abluft ausgelegt ist, wobei die Verbindung der einzelnen Rohrteile miteinander zur Verringerung des Raumbedarfes im Installationsschacht miteinander verbunden sind. Die Anordnung weist einen Wärmetauscher auf, über den die in den Raum eingespeiste Zuluft zusätzlich erwärmt werden kann.

DE-A-37 37 597 beschreibt eine Ausführung für einen einstöckigen Viehstall mit einem Unterdruckgebläse und zwei koaxial angeordneten Rohren und einem einzigen Gebläse, das für zwei Blasrichtungen ausgelegt ist. Ferner zeigt DE-A-3310 569 eine Belüftungsanlage mit einer Zuluftleitung, die mit einem Schalldämpfer zur Reduzierung von Strömungsgeräuschen versehen ist.

EP-A-0 533 629 beschreibt eine Ausführung, bei der die Frischlufteinnahme und die Abgabe der verbrauchten Luft über Öffnungen am Dach erfolgt. Diese Ausführung hat sich für viele Anwendungen als zweckmässig, jedoch für andere Einsätze als nicht ganz optimal erwiesen. Dies hat u.a. damit zu tun, dass die Strömungsgeräusche oft als zu laut empfunden werden. Ferner wird eine Lösung gesucht, bei der die Ein- und die Auslässe für die Frisch- bzw. die Abluft sich nicht nur auf dem Dach befinden. Zudem wird eine Lösung gesucht, bei der es möglich ist, die Frischluft am Einlass durch eine zusätzliche Wärmezufuhr zu erwärmen, was insbesondere im Winterhalbjahr von grossem Nutzen ist, wenn der Wärmeaustausch allein nicht die erwünschte Innentemperatur erbringt. Es ist dabei wichtig, dass der Frischlufteinlass derart ausgelegt oder angelordnet ist, dass die Abluft nicht der Frischluft beigemischt wird.

Aufgabe der Erfindung ist die Schaffung einer Einrichtung der eingangs erwähnten Art, die sowohl für ein- als auch für mehrstöckige Wohn- und Bürogebäude, und zwar insbesondere für die Belüftung und Erwärmung der darin befindlichen Küchen und Badezimmer, sowie für gefangene Räume ausgelegt ist.

Die Einrichtung soll dabei zur Ableitung von Dämpfen und Gerü, chen geeignet sein und geräuscharm arbeiten.

Diese Aufgabe wird erfindungsgemäss durch die Merkmale im Kennzeichnungsteil des ersten Patentanspruches gelöst.

Ausführungsformen sind in den abhängigen Ansprüchen umschrieben.

Bei dieser Einrichtung wird die in der verbrauchten Luft vorhandene Wärmeenergie zur Raumheizung benützt, wobei eingebaute Schalldämpfer die bei der Luftströmung entstandenen Geräusche auf einen kaum vernehmbaren Pegel reduzieren.

Die Einrichtung basiert auf einer Anordnung von zwei koaxial ineinander angeordneten Rohre, wobei die Abluft durch das Innenrohr hinausfliesst, während die Frischluft durch den ringförmigen Raum zwischen den beiden Rohren hineinströmt und durch die Anordnung eines Erdregisters vorerwärmt wird. Durch die Verwendung eines Erdregisters muß keine zusätzliche Fremdenergie zugeführt werden.

Nachfolgend werden Ausführungsbeispiele des Gegenstandes der Erfindung anhand der Zeichnung näher erläutert. Es zeigen:
Fig. 1 einen Teil-Querschnitt durch ein Gebäude mit Schrägdach,
Fig. 2 eine Variante zu Fig. 1, und
Fig. 3 einen Teil-Querschnitt durch eine Variante zu Fig. 1 und 2.

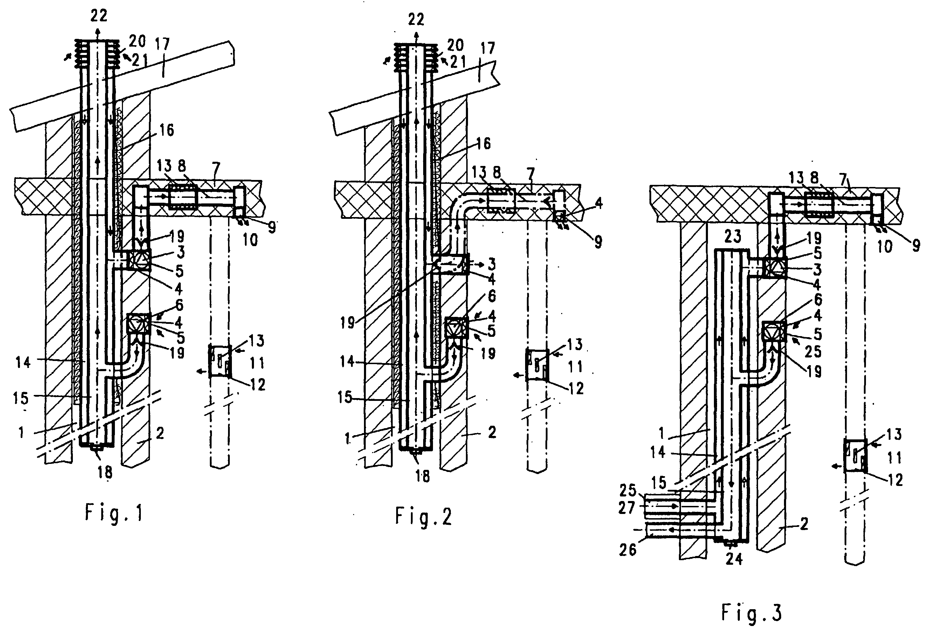

In allen Figuren befindet sich ein Lüftungsschacht 1 mi einer Schachtwand 2 zwei Rohren 14 und 15, Zuluftventilator 3, Luftfilter 4, Wartungsdeckel 5 und Abluftventilator 6. Alle diese Teile befinden sich unterhalb eines Bodens 7. Fig. 1 und 2 zeigen ein Gebäude mit Schrägdach 17, wobei der Schacht auf der Innenseite mit einer Wärme- und Schallisolation 16 ausgestattet ist. In Fig. 1 und 2 wird die Abluft 11 an einer Öffnung 22 an einem Dachaustritt ausgelassen und die Frisch- oder Zuluft 10 an der gleichen Stelle durch eine Öffnung 21 eingelassen.

In allen Fig. sind ferner eine Zuluftleitung 8 und ein Zulufteintritt 9 gezeigt, der mit einem Gitter versehen sein kann.

In Fig. 3 wird die Frischluft durch eine Öffnung 25 und die Abluft durch eine Öffnung 26 in einer Wand ein- bzw. ausgelassen.

In der Decke, Seitenwand oder im Boden 7 können ein oder mehrere Zuluftleitungen 8 eingebaut sein. Falls der oder die Zulufteintritte 9 sich im gleichen Raum befinden, strömt die Zuluft 10 als Abluft 11 direkt dem Abluftventilator 6 zu.

Wird die Zuluft 10 einem anderen Raum der Benutzungseinheit zugeführt, strömt diese als Überströmluft 11 über Überströmeinheiten 12 dem Abluftventilator 6 zu. Als schalldämpfende Massnahme dienen die in der Zuluftleitung und der Überströmeinheit 12 angeordneten Schalldämpfer 13. Zur Verhinderung von ungewollten Luftzirkulationen sind jeweils beim Zu- 3 und Abluftventilator 6 Rückstauklappen 19 eingebaut.

Die Rohre 14 und 15 sind vorzugweise koaxial ineinander angeordnet, haben einen kreisrunden Querschnitt, können aber auch einen beliebigen anderen Querschnitt, wie z.B. viereckig, aufweisen. Der Schacht streckt sich normalerweise durch die für diese Räume genutzten Stockwerke des Gebäudes von einer Stelle oberhalb des Flach- oder Schrägdaches 17 bis unterhalb des untersten be- und entlüfteten Raumes und endet dort mit einem Regen- und Kondensat-Sammelstück 18. Die Wärme- und Schallisolation 16, die nur stellenweise angedeutet ist, kann ferner als Brand- und Kondensat-Schutzisolation ausgebildet sein.

Damit möglichst wenig Regenwasser in die Lüftung eindringt, ist für die Frischluft ein trichterartiger Rohrabschluss 20 am oberen Ende des Rohres auf dem Dach 17 vorgesehen, der eine radiale Strömung in der Richtung des Pfeiles 21 ermöglicht. Die Abluft fliesst senkrecht nach oben, um eine Vermischung mit der Frischluft zu vermeiden. Das trotz dieser Massnahme eintretende Regenwasser sowie das sich ansammelnde Kondenswasser fliessen durch die Rohre 14,15 nach unten und werden aus dem Sammelstück 18 mit einem Anschluss dem Schmutzwasser zugeführt.

Die Steuerung dieser Einrichtung kann für zeitweisen Betrieb erwietert werden und kann als zweistufig mit oder ohne eine Schaltuhr und einer weiteren Schaltmöglichkeit für zwei oder mehrere Leistungsstufen erweitert werden.

Der Schacht 1 kann derart dimensioniert sein, dass sich auch Leitungen für Heizung, Brauchwasser und Abwasser darin unterbringen lassen. In der zugänglichen Schachtwand 2 ist ein Zulufteintritt 9 mit Luftfilter 4 und der Abluftventilator 6 mit Luftfilter 4 und Wartungsdeckel 5 eingebaut.

Falls sich der oder die Zulufteintritte 9 im gleichen Raum befinden, strömt die Zuluft 10 als Abluft 11 direkt zum Abluftventilator 6. Wenn die Zuluft 10 in einem anderen Raum der Benutzungseinheit zugeführt wird, strömt diese als Überstromluft 11 über Überströmeinheiten 12 dem Abluftventilator 6 zu. Zur Schalldämpfung sind in der Zuluftleitung 8 und der Überströmeinheit 12 angeordnete Schalldämpfer 13 vorhanden. Zur Verhinderung einer ungewollten Luftzirkulation sind jeweils im Zu- 3 und Abluftventilator 6 Rückstauklappen 19 eingebaut.

Bei der Ausführung nach Fig. 3 fliesst das Kondenswasser durch die Rohre 14, 15 nach unten und wird aus dem Sammelstück 24 mit einem Anschluss dem Schmutzwasser zugeführt. Die Frischluft 25 wird zur Vorerwärmung über ein Erdregister 27 üblicher Bauart angesogen und die Abluft wird direkt ins Freie geleitet. Die Steuerung der Einrichtung für diesen Fall erfolgt einstufig im Dauerbetrieb.

Die Steuerung dieser Einrichtung kann für zeitweisen Betrieb erweitert werden und kann als zweistufig mit oder ohne eine Schaltuhr und einer weiteren Schaltmöglichkeit für zwei oder mehrere Leistungsstufen erweitert werden.

## Patentansprüche

1. Einrichtung zur Wärmerückgewinnung sowie zur Belüftung und Raumerwärmung mit Mitteln zum Wärmeaustausch zwischen zugeführter Frischluft und der aus dem Raum abgeführten Abluft in einem ein- oder mehrstöckigen Gebäude, wobei diese Mittel zwei ineinander angeordnete Rohre einschliessen und der Ringraum zwischen den Rohren für die Frischluftzufuhr und das innere Rohr für die Abluft ausgelegt ist, wobei die Rohre (14,15) in einem vertikalen Schacht (1) angeordnet sind, der auf der Innenseite mit einer Wärme- und Schallisolation ausgebildet ist, und die Zuleitungen zu den einzelnen Zulufteintritten (9) von Schalldämpfern (13) gegen Strömungsgeräusche umgeben sind, und das untere Ende der vertikalen Rohre (14,15) mit einem lösbaren Abschlussdeckel (18,24) für den Kondensat-Auslass versehen ist, **dadurch gekennzeichnet, dass** zur Vorerwärmung der Frischluft der Einlass für die Frischluft mit einem Erdregister versehen ist.

2. Einrichtung nach Anspruch 1, **dadurch gekennzeichnet, dass** der Lufteinlass für die Frischluft auf Erdbodenhöhe oder darüber angeordnet ist.

3. Einrichtung nach Anspruch 1, **dadurch gekennzeichnet, dass** der Einlass für die Frischluft und der Auslass für die Abluft auf dem Dach des Gebäudes angeordnet sind.

4. Einrichtung nach Anspruch 1, **dadurch gekennzeichnet, dass** der Einlass für die Frischluft und der Auslass für die Abluft an einer Wandung des Gebäudes angeordnet sind.

5. Einrichtung nach Anspruch 3 oder 4, **dadurch gekennzeichnet, dass** der Einlass und der Auslass derart beabstandet voneinander angeordnet sind, bzw. dass Einzugs- oder Blasrichtung derart festgelegt sind, dass die Abluft nicht in den Einlass für die Frischluft angezogen werden kann.

6. Einrichtung nach Anspruch 2, **dadurch gekennzeichnet, dass** ein unter dem Gebäude verlaufender Lüftungsschacht vorhanden ist, welcher mit dem Lufteinlass auf Erdbodenhöhe oder darüber verbunden ist.

7. Einrichtung nach Anspruch 1, **dadurch gekennzeichnet, dass** ein elektrischer Heizkörper am Einlass für die Frischluft vorhanden ist zur zusätzlichen Erwärmung der Frischluft.

## Claims

1. A device for heat recovery as well as for ventilation and room heating, with means for the heat exchange between supplied fresh air and outgoing air led away out of the room in a single-storey or multi-storey building, wherein these means comprise two pipes arranged in one another and the annular space between the pipes is designed for the fresh air supply and the inner pipe for the outgoing air, wherein the pipes (14, 15) are arranged in a vertical shaft (1) which is designed on the inner side with a heat and sound insulation, and the supply conduits to the individual supplied air inlets (9) are surrounded by sound absorbers (13) against flow noises, and the lower end of the vertical pipes (14, 15) is provided with a detachable closure lid (18, 24) for the condensation outlet, **characterised in that** for preheating the fresh air the inlet for the fresh air is provided with a underground register.

2. A device according to claim 1, **characterised in that** the air inlet for the fresh air is arranged at ground height or thereabove.

3. A device according to claim 1, **characterised in that** the inlet for the fresh air and the outlet for the outgoing air are arranged on the roof of the building.

4. A device according to claim 1, **characterised in that** the inlet for the fresh air and the outlet for the outgoing air is arranged on a walling of the building.

5. A device according to claim 3 or 4, **characterised in that** the inlet and the outlet are arranged distanced from one another or that the intake direction or blower direction are fixed, in a manner such that the outgoing air may not be drawn into the inlet for the fresh air.

6. A device according to claim 2, **characterised in that** a ventilation shaft running below the building is present which is connected to the air inlet at ground height or thereabove.

7. A device according to claim 1, **characterised in that** an electrical heating body is present at the inlet for fresh air for additionally heating the fresh air.

## Revendications

1. Dispositif de récupération de chaleur ainsi que d'aération et de réchauffement de l'espace avec des moyens pour l'échange de chaleur entre air frais introduit et l'air vicié évacué de l'espace dans un bâtiment à un ou à plusieurs étages, auquel cas ces moyens incluent deux tubes disposés l'un dans l'autre et l'espace annulaire entre les tubes est prévu pour l'admission d'air frais et le tube interne est prévu pour l'air vicié, auquel cas les tubes (14, 15) sont rangés dans un puits (1) vertical qui est développé sur le coté intérieur avec une isolation thermique et une insonorisation et les conduites d'alimentation aux entrées d'air frais (9) individuelles sont enveloppées d'amortisseurs de bruit (13) contre les bruits d'écoulement et l'extrémité inférieure des tubes (14, 15) verticaux est pourvue d'un couvercle (18, 24) amovible pour l'écoulement du produit de condensation, **caractérisé par le fait que** l'entrée pour l'air frais est pourvue d'une nappe de tubes pour le préchauffement de l'air frais.

2. Dispositif selon la revendication 1, **caractérisé par le fait que** la prise d'air pour l'air frais est arrangée à hauteur du sol ou au-dessus.

3. Dispositif selon la revendication 1, **caractérisé par le fait que** l'entrée pour l'air frais et l'écoulement pour l'air vicié sont arrangés sur le toit du bâtiment.

4. Dispositif selon la revendication 1, **caractérisé par le fait que** l'entrée pour l'air frais et l'écoulement pour l'air vicié sont arrangés sur une paroi du bâtiment.

5. Dispositif selon la revendication 3 ou 4, **caractérisé par le fait que** l'entrée et l'écoulement sont arrangés de telle manière distanciés l'une de l'autre et/ou que les directions d'alimentation et de soufflage sont déterminées de telle sorte que l'air vicié ne peut pas être attiré dans l'entrée pour l'air frais.

6. Dispositif selon la revendication 2, **caractérisé par le fait qu'**un puits d'aération passant sous le bâtiment est disponible et ce puits d'aération est relié avec la prise d'air à hauteur du sol ou au-dessus.

7. Dispositif selon la revendication 1, **caractérisé par le fait qu'**un radiateur de chauffage électrique est disponible à l'entrée pour l'air frais pour réchauffer de façon accessoire l'air frais.
